# EUROPEAN PATENT SPECIFICATION

(11) **EP 0 396 358 B1**
(45) Date of publication and mention of the grant of the patent: **23.08.1995**
(21) Application number: 90304636.5
(22) Date of filing: 27.04.1990
(51) Int. Cl.: H04N 1/387, G06F 3/153, G09G 5/14, G06K 11/00, G06F 3/00

(54) **Image reading apparatus**
Bildlesegerät
Dispositif pour lire des images

(30) Priority: 02.05.1989 JP 113451/89; 02.05.1989 JP 113452/89
(43) Date of publication of application: 07.11.1990
(73) Proprietor: SONY CORPORATION, Tokyo 141 (JP)
(72) Inventor: Sato, Tatsuru, c/o Patents Division, Sony Corp., Shinagawa-ku, Tokyo 141 (JP)
(74) Representative: Cotter, Ivan John

(56) References cited:
- DE-A- 3 625 390
- DE-A- 3 707 490
- US-A- 4 641 197
- US-A- 4 809 215
- US-A- 4 813 013

## Description

This invention relates to image reading apparatus in which image data read by an image reading means are displayed on a display means such as a cathode ray tube (CRT).

As an image reading apparatus, there is known a scanning apparatus whereby digital image data produced upon reading an image document by an image sensor such as a charge coupled device (CCD) are supplied by way of a digital interface, such as a GPIB. For providing the read image in a visible form, such as by printing or monitor display, it is necessary to provide a computer in the system, thereby increasing the size and cost of the system. On the other hand, the response properties are rather poor because of time-consuming signal processing operations. For this reason, image reading apparatus using such a scanner is not suitable for presentation purposes, for example for a lecture.

In a copending patent application, we have proposed an image reading apparatus in which an image document is read for storage into an image memory, and the stored contents are repeatedly read from the image memory in synchronism with horizontal and vertical scanning signals of a video signal, so as to be derived as video signals for displaying a still image.

For presentations, for example, it is frequently desired that an oral comment be made while attention is directed to portions of the displayed image. However, since a verbal indication may be insufficient to given an accurate indication of the portion referred to, there has been a need to provide an image reading apparatus capable of giving visual indications of portions of an image.

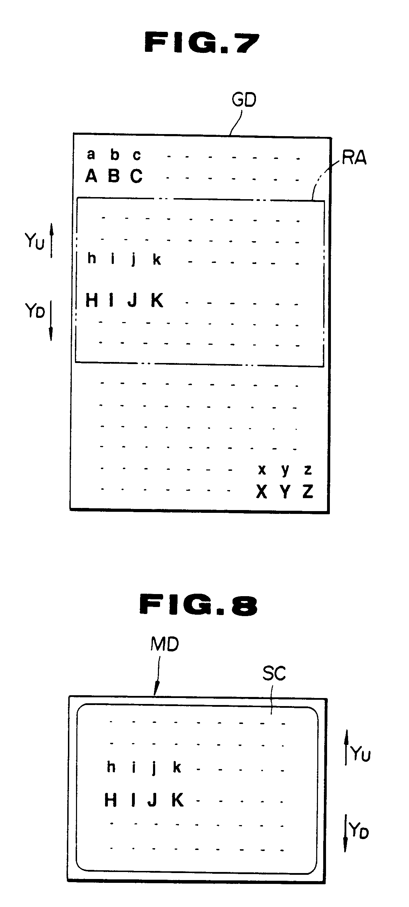

On the other hand, in an image reading apparatus for directly outputting video signals, it has been envisaged that the capacity of the image memory be sufficiently larger than the display to permit scrolling. In a scrolled display, as shown in Figure 7, a memory reading region RA corresponding to the display range on a display screen SC of a monitor receiver MD of Figure 8, is moved vertically for vertically shifting the contents of the image displayed on the display screen SC. In this case, if the memory reading region RA is moved in an upward direction YU with respect to the image document GD stored in the image memory, the contents of the displayed image on the display screen SC of Figure 8 are moved in a downward direction YD by a scrolling down operation.

Assuming that pointer marks, such as arrows, are displayed for indicating portions of the image, and that pointer mark display signals are generated by a character generator or the like and superimposed as output display signals on image data read from the image memory; then if only the display contents of the image read from the image memory are scrolled, the portion indicated by the pointer mark is undesirably shifted with respect to the contents of the displayed image. It is also not desirable that characters having positional pertinence to the image contents, such as trimming frames, be deviated from the correct relative position at the time of scrolling.

US-A-4809215 discloses an information processing system, particularly for an electronic document file system, in which text stored in coded form is decoded and supplied to a display memory which is repeatedly read to derive a video signal to drive a display. To avoid interruption of the display, the decoded text is written to the display memory at timings when the memory is not being read.

US-A-4641197 discloses an image processing system in which a document is read by an image reader and the image data is stored in an image memory. A word processor is used to generate text to be included in a final print-out with the image data. An image processor performs editing and stores the read image data and the text in the required, non-overlapping areas of an edited data memory the content of which is then supplied to a printer for printing out the edited copy.

According to the present invention there is provided image reading apparatus comprising:
image read-out means for reading an image document to generate image data; and
an image memory for storing the image data; characterised by:
memory control means for controlling repeated reading of image data from a reading region of the image memory to derive a video signal for supply to a display;
character generator means for generating character signals representing indicators for indicating desired portions of the displayed image;
means for superimposing the character signals on the video signal supplied to the display whereby the indicators are superimposed on the displayed image; and
system control means, responsive to operator input means, for changing the reading region of the image memory and for controlling the timing of the character signals relative to the video signal such that the position of an indicator on the displayed image can be varied under operator control, and, when the reading region (RA) of the image memory is changed, the timing of the character signals relative to the video signal is changed to maintain the positional relationship between the indicators and the displayed image.

Thus in an embodiment of the invention, the character display signals for the character in the form of indicators from the character generating means are superimposed as display signals on image data read from the image memory, in which image data read from the reading head are stored, whereby the characters in the form of indicators may be displayed at desired positions on the display screen for visually indicating particular portions of the display screen.

In an embodiment of the invention, when scrolling by shifting the reading range of image data stored in the image memory, the display position of character display signals from the character generator is shifted in dependence upon the shifting of the reading range to prevent deviation of the positional association between the displayed image and the indicators during scrolling. Thus any desired portion of the image displayed on the display screen may be pointed to by displaying a character having the shape of an indicator, that is a pointer mark, at the desired portion of the display screen.

The pointer mark may be moved or changed in hue or shape by movement of a switch, a mouse or a joystick. For example, a pointer mark matched to the contents of an illustration may be displayed for highly effective visual presentation.

When the reading region of image data stored in the image memory is shifted for scrolling the displayed image, the display position of the character display signals having positional pertinence to the contents of the displayed image, such as characters, and in particular pointer marks or trimming frames, from the character generating means, is shifted whereby deviation in the position of the indicator relative to the displayed image during scrolling is prevented.

The invention will now be described by way of example with reference to the accompanying drawings, throughout which like parts are referred to by like references, and in which:
Figure 1 is a block diagram of an embodiment of image reading apparatus according to the present invention;
Figure 2 is a diagram of a displayed table and a pointer mark on a display screen;
Figures 3 and 4 are diagrams showing a pointer mark formed by character patterns;
Figures 5 and 6 and diagrams illustrating a scrolling operation;
Figure 7 is a diagram illustrating movement of a reading region with respect to image data stored in a memory; and
Figure 8 is a diagram of a display on the display screen.

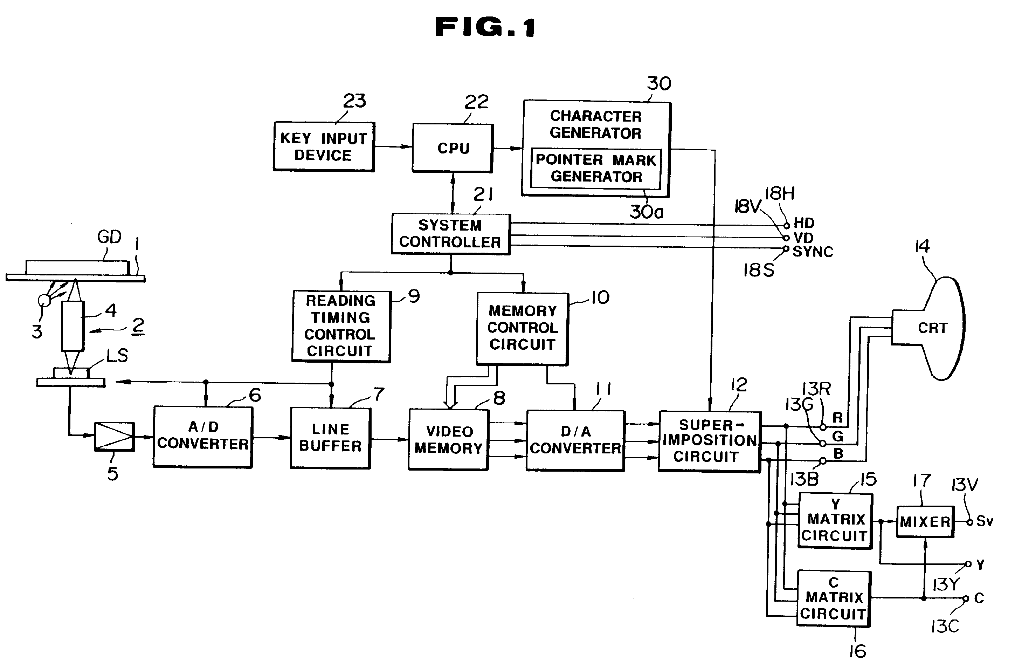

In the image reading apparatus, shown in Figure 1, an image reading head 2 for reading an image document GD resting on a document table 1 is provided with a light source 3, a multiple lens array 4 and a charge coupled device (CCD) line sensor LS. The light source 3 irradiates the document GD and the light reflected therefrom is received by the line sensor LS via the lens array 4. The line sensor LS is formed of a linear array of, for example, 1728 CCD light receiving cells. When reading one line of the document GD, the light source 2 sequentially emits coloured light rays corresponding to the three primary colours red (R), green (G) and blue (B) to produce three primary colour image signals in a line sequential manner. The output from the line sensor LS is amplified by an amplifier 5 and supplied to an analogue-to-digital (A/D) converter 6 where it is converted into digital video data which are stored in a video memory 8, such as a static random access memory (SRAM) or dual port memory, after timing control by a line buffer 7, such as a first-in-first-out (FIFO) memory. The operation of the line sensor LS, the A/D converter 6 and the memory buffer 7 is controlled by timing control signals from a reading timing control circuit 9, while the writing/reading of the memory 8 is controlled by control signals from a memory control circuit 10.

The primary colour video data corresponding to R, G and B are read from the memory 8 and transmitted to a digital-to-analogue (D/A) converter 11 where they are converted into analogue R, G and B video signals, which are then transmitted to a superimposition circuit 12, to which are also supplied character display signals from a character generator 30. These character display signals are supplied for superimposition on the video signals read from the memory 8. In general, the character generator 30 supplies character pattern display signals, such as character patterns, numeral patterns or trimming frames. With the present embodiment, the character generator 30 generates display signals for characters having at least the shape of indicators or pointer marks indicating desired portions on the display screen. This is shown for example as a pointer mark generating section 30a.

The R, G and B video signals from the superimposition circuit 12, after super imposition of the character display signals are available at output terminals 13R, 13G and 13B so as to be supplied to a display apparatus such as a colour cathode ray tube monitor (CRT monitor) 14. The R, G and B signals from the superimposition circuit 12 are transmitted to a luminance (Y) matrix circuit 15 and a chrominance (C) matrix circuit 16, and the Y and C signals from these circuits 15 and 16 are available at output terminals 13Y and 13C, respectively. These Y and C signals are mixed in a mixer 17 to produce so-called composite video signals SV which are then available at an output terminal 13V.

The reading timing control circuit 9 and the memory control circuit 10 are controlled by a system controller 21 which sends or receives data or control signals between it and a central processing unit (CPU) 22. The system controller 21 and the CPU 22 may be of a unified structure.

A key input device 23 supplies to the CPU 22 key input signals which can produce or shift the above-mentioned pointer marks, change the display colour or pattern configuration of the pointer marks, scroll the contents of the displayed image or determine the image reading range.

The memory 8 has a capacity greater than the display range on the CRT monitor 14, and shifts the data reading range for the display RA in the direction of arrows YU and YD with respect to the video data of the document GD stored in the memory 8, as shown for example in Figure 7, by way of performing a so-called scrolling display in which the contents of the displayed image are moved in the directions of the arrows YD and YU on the display screen SC of a monitor receiver MD or the CRT monitor 14, shown in Figure 8. When the display RA shown in Figure 7 is moved upwards or in the direction shown by the arrow YU, the display on the display screen SC of Figure 8 is moved down in the direction shown by the arrow YU (scroll down operation). This scroll display is achieved in such a fashion that the operation of a scroll up/down key provided in the key input device 23 is sensed by the CPU 22, which with the system controller 21 controls the memory control circuit 10 to shift the data reading region of the memory 8.

The CPU 22 controls the character generator 30 responsive to key inputs for pointer display or trimming frame display, so that the pointer marks or the trimming frames for displaying the image reading range are formed by one or more character patterns, with the character display signals from the character generator 30 being transmitted to the superimposition circuit 12 for superimposition on the video signals. After a trimming frame has been displayed in this manner on the screen of the CRT monitor 14, and its size or position has been determined, a trimming key of the key input device 23 is actuated. The CPU 22 and the system controller 21 then control the reading timing control circuit 9 for re-reading the image reading range within the document GD determined in the above determined manner, that is the range of the display screen SC corresponding to the trimming frame. The character generator 30 displays various functions associated with various operations of the image reading apparatus, and is provided with a character pattern read only memory (ROM) in which patterns of alphabetical letters, numerals or symbols, including patterns for displaying pointer marks or trimming frames are stored.

The system controller 21 supplies a horizontal sync signal ND, a vertical sync signal VD and a composite sync signal SYNC which a mixture of the signals ND and VD, at output terminals 18H, 18V and 18S, respectively.

With the present embodiment, character patterns forming the pointer marks may be previously written in, for example, a character ROM in the pointer mark generator section 30a, in addition to the other character patterns. These character patterns forming the pointer marks may be read for display on the screen for indicating desired portions in the video data.

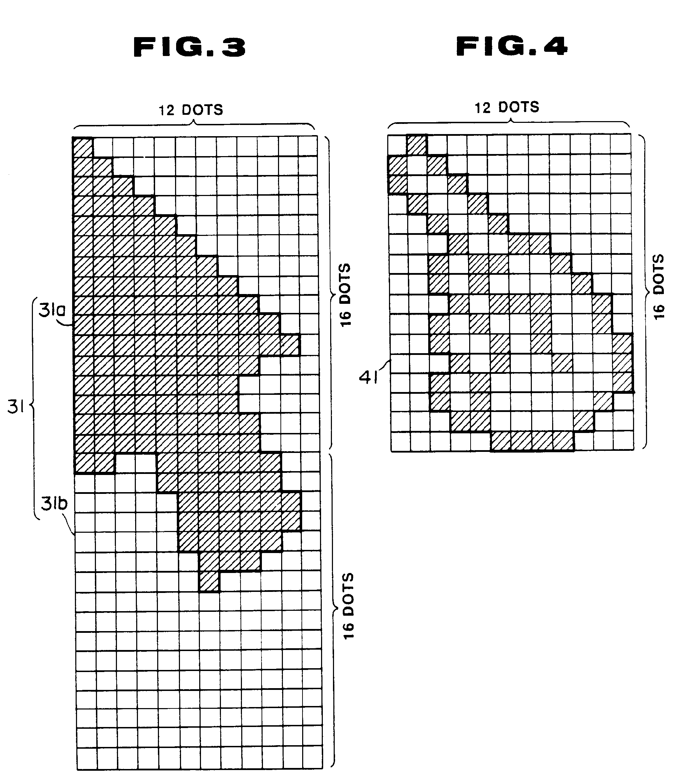

Figures 3 and 4 illustrate specific examples of the contour of the pointer marks.

Figure 3 shows a pointer mark 31 in the form of an arrow comprising character patterns 31a and 31b forming an upper and a lower portion of the arrow. Figure 4 shows a pointer mark in the form of a patterned finger of a hand which is formed by a single character pattern.

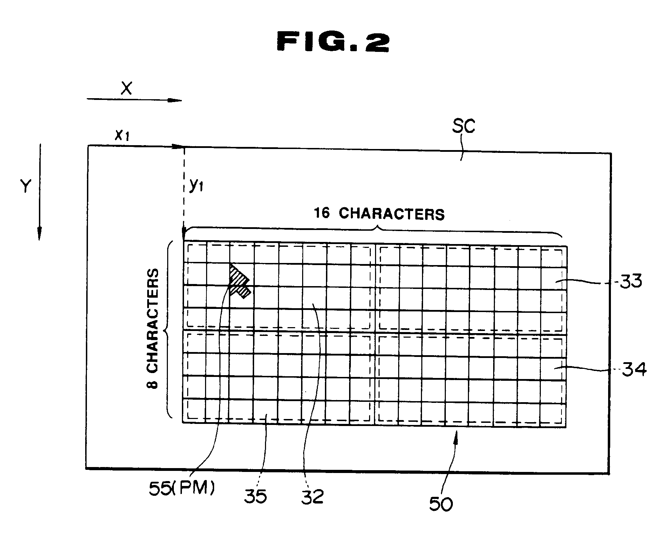

Such a pointer mark is displayed on a character display table 50 shown in Figure 2.

When the signals for pointer mark display are displayed in superimposition on the display screen SC, the 128-character display table 50 formed by sixteen characters in the horizontal direction and eight characters in the vertical direction is displayed at a predetermined position on the display screen SC. Display of various functions of the image reading apparatus is usually performed by sequentially arraying character patterns, such as alphabetical letters or numerals, on the display table 50. The pointer mark may be displayed in the similar manner in desired allocated positions on the display table 50 on the display screen SC.

Supposing that the portion desired to be pointed is at the upper left side of the display screen SC, it suffices to display a pointer mark 55 at the upper left allocated position of the display table 50. The desired portion in the displayed image may be pointed to with positional accuracy of the order of one character.

By displaying the pointer mark at the desired position on the display table 50 allocated for display, desired portions in the displayed image may be pointed freely with positional accuracy of the order of one character. The pointer mark can also be moved by shifting the position of the display table 50 on the display screen SC.

If the display position of the display table 50 on the display screen SC of Figure 2, such as X and Y coordinates (x₁, y₁) at the upper left end, can be changed by the pointer mark generator section 30a, the position of the display table 50 on the display screen SC can be changed to shift the pointer mark 55 displayed on the display table 50. Hence, by shifting the pointer mark 55 within the display table 50 by the order of one character and further shifting the display table 50, the desired portion in the displayed image may be pointed with a higher accuracy. Such change in the display position of the display table 50 itself may be realized by controlling the read-out timing of the display table 50 with respect to the horizontal and vertical sync signals.

With the present embodiment, each character pattern is formed by twelve horizontal dots and sixteen vertical dots, and the display table 50 is formed by sixteen horizontal characters or 192 dots, and eight vertical characters or 256 dots. Each dot of the character pattern is read in the horizontal direction by a 5 kHz clock signal, while each dot of the character pattern along the vertical direction corresponds to each scanning line of the display screen SC of the CRT monitor 14. Thus the display screen SC in its entirety is formed by 250 horizontal dots (5 kHz clocks per hour) and 480 vertical dots, with the effective display surface being formed by 480 lines. The 192 X 256 dot display table 50 is movably displayed with the display screen SC.

The pointer mark 31 in the form of an arrow shown in Figure 3 and a pointer mark 41 in the form of a finger of a hand shown in Figure 4 may be switched in shape or hue by a switch, a mouse or a joystick of the key input device 23. For example, if the pointer mark 31 shown in Figure 3 is first displayed in a black hue, the display may be switched from black in the sequence of red, green, yellow, blue, magneta, cyan and white, each time the switch is pressed. When the display hue is switched to white, the pointer 31 is switched to the pointer mark 41 in the form of a finger as shown in Figure 4. The display hue is similarly changed from black through red, green, yellow, blue, magneta and cyan to white in this sequence to again return to and start at black in a repetitive fashion. Thus the user may select the pointer mark of desired shape and hue. The pointer mark may also be moved by a switch, a mouse or a joystick and its shape or hue may be changed in accordance with the contents of an oral explanation, for improved effect.

The pointer marks previously stored in the character ROM in the pointer mark generator section 30a are not limited to the contours of the marks 31 and 41. For example, although these pointer marks 31 and 41 point to the upper left, character patterns may also be stored in the character ROM which point in other directions, that is to the upper right, lower right and lower left. Character patterns pointing in eight directions, including upper, lower, left and right in addition to the above four inclined directions, may also be stored in the character ROM.

As a modification, with the use of the four pointer marks pointing to the upper right, lower right, upper left and lower left, the display region of the display table 50 may be divided into four regions 32, 33, 34 and 35 as shown in Figure 2, in such a manner that, when the pointer marks are displayed in these regions, each of the four marks is displayed in that one of the regions to which it is allocated for pointing to a desired portion of the image data. For example, the pointer mark pointing to the upper left is displayed in the upper left quadrant region 32, the point mark pointing to the upper right is displayed in the upper right quadrant region 33, the pointer mark pointing to the lower right is displayed in the lower right quadrant region 34, and the pointer mark pointing to the lower left is displayed in the lower left quadrant region 35, so that the four corners in the display table 50 can be pointed to simultaneously.

The present invention is not limited to the above described embodiments. For example, as the character generating means for generating pointer mark display signals, a pattern generating ROM in which pointer mark patterns are stored may be employed instead of using a general character generator. In this case, the pattern reading timing from the ROM is changed with respect to the horizontal and vertical sync signals to shift the pointer mark display position on the display screen SC. The contour of the pointer mark may also be a triangle or any other contour besides that of the arrow or index finger. The hues of the pointer marks or the switching sequence of the hues may be changed from those given above.

The display position on the display screen of the characters having positional pertinence to the contents of the displayed image, such as the above-mentioned pointer marks or trimming frames, may be moved concomitantly during a scrolling operation, so that the relative position of the displayed character with respect to the contents of the displayed image is not shifted. To this end, the read-out region for the display RA from the image memory 8 is shifted by the memory control circuit 10, which is controlled by the CPU 22 and the system control circuit 21 responsive to a scrolling input from the key input device 23, at the same time that the display position on the screen of character signals from the character generator 30 is moved synchronously.

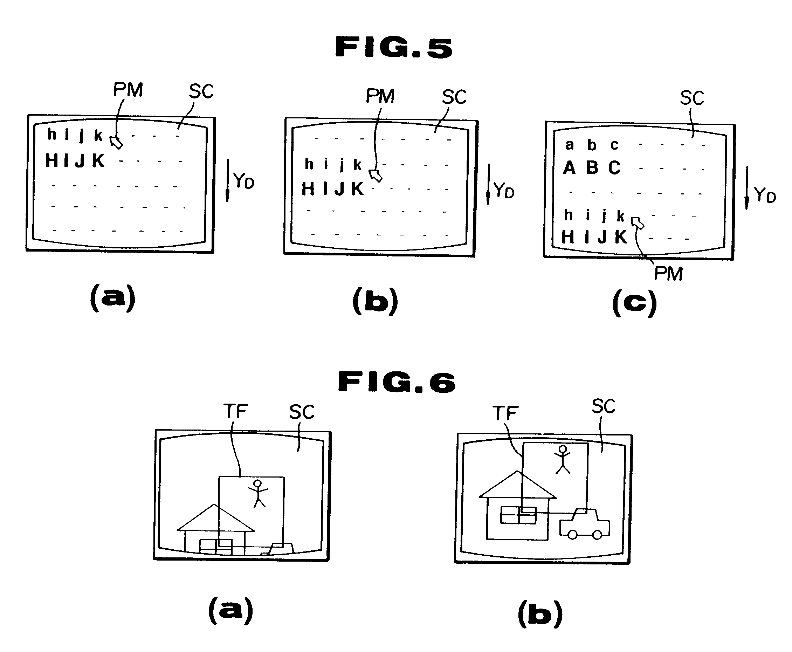

The scrolling operation is performed without the position of the pointer mark PM deviating respect to the contents of the image displayed on the display screen SC, as shown for example at (a), (b) and (c) in Figure 5, and without the position of the trimming frame TF deviating with respect to the contents of the image displayed on the display screen SC, as shown at (a) and (b) in Figure 6. The display position of the characters having positional pertinence with respect to the contents of the displayed image, such as the pointer marks or trimming frames, is shifted in timed relation with the scrolling of the displayed image, as described above. The character display position can be shifted step-wise on a character-by-character basis by changing the position allocated for character display within the character display table 50. A read-out range delimiting can be shifted by changing the display position of the character display table 50 in the display screen SC. That is to say, if the display position of the character display table 50 on the display screen SC of Figure 4, such as the X, Y coordinates (x₁, y₁), can be changed by the character generator 30, the pointer mark PM or the trimming frame displayed in the character display table 50 can be moved by changing the position of the character display table 50 on the display screen SC.

With the present embodiment, a portion of the document GD delimited by the trimming frame is re-read by the reading head 2 so as to be displayed to an enlarged scale on the overall surface of the display screen SC. Considering that the number of light receiving cells of the line sensor LS is 1728, and the resolution in the Y or vertical direction of an ordinary CRT monitor screen surface SC is 480 or so, if a full size document of A4 format is to be displayed in its entirety on the screen surface SC, it suffices to read out the cells at a thinning-out rate of one to four cells. When a 1/4-size region is to be read and displayed to an enlarged scale, it may be read with sufficient resolution by the same line sensor LS. The merit derived from re-reading the document is apparent on taking into account the deterioration in resolution which is brought about when only a portion of a region of image data is read from the document, and is stored in the image memory and displayed on an enlarged scale.

It is noted that the standard read-out range of the image reading apparatus of the present embodiment is of A4 format with the long side horizontal. When an image document with horizontal writing on a sheet placed with the long side vertical is to be displayed, the upper half of the A4 format document is displayed at the output in its entirety. When an UP key of an UP/DOWN key unit of the key input device is pressed in this condition, the display is scrolled upwards, as indicated by the arrow YU′ at steps of two lines (2H) each time. In connection with this scrolling function, although the DOWN key in the initial state is not accepted, both the UP and DOWN keys are accepted after start of scrolling.

The illustration of these functions is displayed by the character generator 30 on the screen under control of the CPU 22. For example, when trimming is again performed after trimming as described above, "TRIMMING ONCE ONLY" is displayed, indicating that trimming after trimming is not feasible. An error message such as "NO TRIMMING IN SCROLL MODE", indicating that trimming is not feasible during the scroll mode, as well as error messages such a "NO TRIMMING DURING SUPERIMPOSITION", "NO SIZE CHANGING IN SCROLL MODE", "NO SUPERIMPOSING IN SCROLL MODE", "NO COLOUR CHANGING FOR TRIMMING FRAME" OR "NO TRIMMING AFTER READING MINIMUM SIZE DOCUMENT" are displayed. The read-out size, such as "SIZE n" at the time of changing the size of the read-out range, is also displayed by the character generator 30 under control by the CPU 22.

The above scrolling may be performed not only vertically but also horizontally if the memory capacity is increased further. If the pointer mark on the trimming frame is moved in synchronism with scrolling to reach the edge of the display screen SC, the pointer mark or the trimming frame may continue to be moved further. However, the pointer mark or the trimming frame may cease to be moved, and only the contents of the displayed image may be scrolled, in order to prevent the pointer marks of the trimming frame from vanishing from sight. The legends concerning the functions of the above apparatus need not be synchronized with scrolling, but may be displayed stationarily at prescribed positions within the display screen SC.

## Claims

1. Image reading apparatus comprising:
image read-out means (2) for reading an image document (GD) to generate image data; and
an image memory (8) for storing the image data; characterised by:
memory control means (10) for controlling repeated reading of image data from a reading region (RA) of the image memory (8) to derive a video signal for supply to a display (14);
character generator means (30a) for generating character signals representing indicators for indicating desired portions of the displayed image;
means (12) for superimposing the character signals on the video signal supplied to the display (14) whereby the indicators are superimposed on the displayed image; and
system control means (21, 22), responsive to operator input means (23), for changing the reading region (RA) of the image memory (8) and for controlling the timing of the character signals relative to the video signal such that the position of an indicator on the displayed image can be varied under operator control, and, when the reading region (RA) of the image memory is changed, the timing of the character signals relative to the video signal is changed to maintain the positional relationship between the indicators and the displayed image.

2. Apparatus according to claim 1, wherein the reading region (RA) of the image memory (8) can be changed by the system control means (21, 22) to effect a scrolled display on the display (14).

3. Apparatus according to claim 1 or claim 2 wherein said character signals represent indicators in the form of pointer marks (55) for pointing to any part of the displayed image.

4. Apparatus according to claim 3 wherein, for displaying a pointer mark (55), the character generator means (30a) generates character signals representing a display table (50), containing the pointer mark (55), for superimposition on the video signal, and wherein the system control means (21, 22) can control the position of the pointer mark (55) within the display table (50) and the position of the display table (50) in the displayed image.

5. Apparatus according to claim 1 or claim 2 wherein said character signals represent indicators in the form of frames (TF) for trimming the displayed image.

6. Apparatus according to claim 5 wherein, for trimming the displayed image, the system controller (21, 22) controls the image read-out means (2) to re-read the portion of the image document (GD) corresponding to the image area delimited by the frame (TF) with a higher resolution than that used when reading the document to produce the untrimmed image.

7. Apparatus according to any preceding claim wherein said character generator means (30a) further generates character signals for indicating a condition or function of said apparatus for superimposition on the video signal.

8. Apparatus according to any preceding claim wherein character generating means (30a) comprises a read only memory.

9. Apparatus according to any preceding claim, wherein the display colour of an indicator generated by the character generator means (30a) can be changed under control of said operator input means (23).

10. Apparatus according to any preceding claim comprising output terminals for supplying the video signal with said character signals superimposed thereon to an external apparatus.

## Patentansprüche

1. Bildlesevorrichtung, mit:
einer Bildleseeinrichtung (2) zum Lesen eines Bilddokuments (GD), um Bilddaten zu erzeugen; und
einem Bildspeicher (8) zum Speichern von Bilddaten; gekennzeichnet durch:
eine Speichersteuereinrichtung (10) zur Steuerung eines wiederholten Lesens von Bilddaten aus einem Lesebereich (RA) des Bildspeichers (8), um ein Videosignal zur Lieferung zu einer Anzeigeeinrichtung (14) herzuleiten;
eine Zeichenerzeugungseinrichtung (30a) zur Erzeugung von Zeichensignalen, die Indikatoren darstellen, um gewünschte Bereiche des anzeigten Bildes anzuzeigen;
eine Einrichtung (12) zur Überlagerung der Zeichensignale auf dem Videosignal, das zur Anzeigeeinrichtung (14) geliefert wird, wodurch die Indikatoren auf dem angezeigten Bild überlagert werden; und
eine Systemsteuereinrichtung (21, 22), die auf eine Bedienereingabeeinrichtung (23) reagiert, um den Lesebereich (RA) des Bildspeichers (8) zu ändern, und um die Synchronisation der Zeichensignale gegenüber dem Videosignal so zu steuern, daß die Position eines Indikators auf dem angezeigten Bild aufgrund der Bedienersteuerung variiert werden kann, und, wenn der Lesebereich (RA) des Bildspeichers geändert wird, die Synchronisation der Zeichensignale gegenüber dem Videosignal geändert wird, um die gegenseitige Position zwischen den Indikatoren und dem angezeigten Bild beizubehalten.

2. Vorrichtung nach Anspruch 1, wobei der Lesebereich (RA) des Bildspeichers (8) durch die Systemsteuereinrichtung (21, 22) geändert werden kann, um eine rollende Anzeige auf der Anzeigeeinrichtung (14) zu bewirken.

3. Vorrichtung nach Anspruch 1 oder 2, wobei die Zeichensignale Indikatoren in Form von Zeigern (55) darstellen, um irgend einen Teil des abgebildeten Bilds anzudeuten.

4. Vorrichtung nach Anspruch 3, wobei zur Anzeige eines Zeigers (55) die Zeichenerzeugungseinrichtung (30a) Zeichensignale erzeugt, die eine Anzeigetafel (50) darstellen, die den Zeiger (55) enthält, zur Überlagerung auf dem Videosignal, und wobei die Systemsteuereinrichtung (21, 22) die Position des Zeigers (55) innerhalb der Anzeigetafel (50) und die Position der Anzeigetafel (50) im angezeigten Bild steuern kann.

5. Vorrichtung nach 1 oder 2, wobei die Zeichensignale Indikatoren in Form von Rahmen (TF) zur Feineinstellung des angezeigten Bildes darstellen.

6. Vorrichtung nach Anspruch 5, wobei zur Feineinstellung des angezeigten Bildes die Systemsteuerung (21, 22) die Bildleseeinrichtung (2) steuert, um den Teil des Bilddokuments (GD) wieder zu lesen, das dem Bildbereich entspricht, der durch den Rahmen (TF) entfernt wurde, mit einer höheren Auflösung als der, die verwendet wird, wenn das Dokument gelesen wird, um das nicht-feineingestellte Bild zu erzeugen.

7. Vorrichtung nach einem der vorhergehenden Ansprüche, wobei die Zeichenerzeugungseinrichtung (30a) außerdem Zeichensignale erzeugt, um eine Bedingung oder Funktion der Vorrichtung zur Überlagerung auf dem Videosignal anzuzeigen.

8. Vorrichtung nach einem der vorhergehenden Ansprüche, wobei die Zeichenerzeugungseinrichtung (30a) einen Nur-Lese-Speicher aufweist.

9. Vorrichtung nach einem der vorhergehenden Ansprüche, wobei die Anzeigefarbe eines Indikators, der durch die Zeichenerzeugungseinrichtung (30a) erzeugt wurde, aufgrund der Steuerung der Bedienereingabeeinrichtung (23) geändert werden kann.

10. Vorrichtung nach einem der vorhergehenden Ansprüche, die Ausgangsanschlüsse aufweist, um das Videosignal mit den überlagerten Zeichensignalen zu einer externen Vorrichtung zu liefern.

## Revendications

1. Appareil de lecture d'images, comprenant:
- des moyens de lecture d'images (2) pour lire un document constitué par une image (GD) pour produire des données d'image; et
- une mémoire d'image (8) pour mémoriser les données d'image, caractérisé par:
- des moyens de commande de mémoire (10) pour commander la lecture répétée de données d'image dans une région de lecture (RA) de la mémoire d'image (8) pour obtenir un signal vidéo pour fourniture à un dispositif d'affichage (14);
- des moyens formant générateur de caractères (30a) pour produire des signaux de caractères représentant des indicateurs pour indiquer des parties désirées de l'image affichée;
- des moyens (12) pour superposer les signaux de caractères au signal vidéo fourni au dispositif d'affichage (14), ce par quoi les indicateurs sont superposés à l'image affichée; et
- des moyens de commande de système (21, 22) sensibles à des moyens d'entrée d'opérateur (23) pour changer la région de lecture (RA) dans la mémoire d'image (8) et pour commander le cadencement des signaux de caractères par rapport au signal vidéo de telle manière que la position d'un indicateur sur l'image affichée puisse être modifiée sous la commande d'un opérateur et, lorsque la région de lecture (RA) dans la mémoire d'image est changée,le cadencement des signaux de caractères par rapport au signal vidéo est changé pour maintenir la relation de position entre les indicateurs et l'image affichée.

2. Appareil selon la revendication 1, dans lequel la région de lecture (RA) dans la mémoirre d'image (8) peut être changée par les moyens formant système de commande (21, 22) pour produire un affichage avec défilement sur le dispositif d'affichage (14).

3. Appareil selon la revendication 1 ou la revendication 2, dans lequel lesdits signaux de générateur de caractères représentent des indicateurs en forme de marques de pointage (55) pour pointer vers n'importe quelle partie de l'image affichée.

4. Apapreil selon la revendication 3, dans lequel, pour afficher une marque de pointage (55), les moyens formant générateur de caractères (30a) produisent des signaux de caractères représentant une table d'affichage (50) contenant la marque de pointage (55) pour superposition au signal vidéo, et dans lequel les moyens de commande de système (21, 22) peuvent commander la position de la marque de pointage (55) dans la table d'affichage (50) et la position de la table d'affichage (50) dans l'image affichée.

5. Appareil selon la revendication 1 ou la revendication 2, dans lequel lesdits signaux de caractères représentent des indicateurs en forme de cadre (TF) pour délimiter l'image affichée.

6. Appareil selon la revendication 5, dans lequel, pour délimiter l'image affichée, le régisseur de système (21, 22) commande aux moyens de lecture d'image (2) de relire la partie du document constitué par une image (GD) correspondant à la zone de l'image délimitée par le cadre (TF) avec une définition meilleure que celle utilisée lors de la lecture du document effectuée pour produire l'image sans cadre de délimitation.

7. Appareil selon l'une quelconque des revendications précédentes, dans lequel lesdits moyens formant générateur de caractères (30a) produisent en outre des signaux de caractères pour indiquer un état ou une fonction dudit appareil pour superposition au signal vidéo.

8. Appareil selon l'une quelconque des revendications précédentes, dans lequel lesdits moyens formant générateur de caractères (30a) comprennent une mémoire morte.

9. Apapreil selon l'une quelconque des revendications précédentes, dans lequel la couleur d'affichage d'un indicateur produit par les moyens formant générateurs de caractères (30a) peut être changée sous la commande desdits moyens d'entrée d'opérateur (23).

10. Appareil selon l'une quelconque des revendications précédentes, comprenant des bornes de sortie pour fournir le signal vidéo avec lesdits signaux de caractères superposés à celui-ci à un appareil extérieur.
